# EUROPEAN PATENT APPLICATION

(11) **EP 4 801 021 A1**
(43) Date of publication of application: **02.09.2026**
(21) Application number: 24897688.8
(22) Date of filing: 29.11.2024
(51) Int. Cl.: H04M 3/523, G06Q 10/063

(54) **INFORMATION PROCESSING DEVICE AND INFORMATION PROCESSING METHOD**

(30) Priority: 01.12.2023 JP 2023203950
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/042299
(87) International publication number: WO 2025/116004

(57) **Abstract**

An information processing apparatus (5) according to an embodiment includes a control unit (12) that sets the number of lines to be allocated to each call center (20) for a plurality of call centers (20), based on a call content between an operator (21) of each call center (20) and a customer.

## Description

### Technical Field

The disclosed embodiments relate to an information processing apparatus, and an information processing method.

### Background Art

Conventionally, a relay apparatus that relays a telephone call from a user to an operator of a call center is known (for example, Patent Document 1).

### Citation List

### Patent Literature

Patent Document 1: Japanese Patent Application Laid-Open No. 2023-006986

### Summary of Invention

### Technical Problem

When there are a plurality of call centers, a response may change depending on a connected call center, and there is room for improvement in terms of improving a degree of satisfaction of a customer.

The present invention has been made in view of the above, and an object thereof is to provide an information processing apparatus, and an information processing method that improve a degree of satisfaction of a customer using a call center.

### Solution to Problem

An information processing apparatus according to an aspect of an embodiment includes a control unit that sets the number of lines to be allocated to each call center for a plurality of call centers, based on a call content between an operator of each call center and a customer.

### Effects of Invention

According to an aspect of an embodiment, a degree of satisfaction of a customer using a call center can be improved.

### Brief Description of the Drawings

FIG. 1 is a schematic diagram showing a call system according to an embodiment.
FIG. 2 is a diagram schematically illustrating an example of a relay apparatus according to the embodiment.
FIG. 3A is a diagram showing the number of lines of each call center.
FIG. 3B is a diagram showing the number of lines of each call center.
FIG. 4 is a flowchart illustrating the number of lines setting process according to the embodiment.
FIG. 5 is a diagram schematically showing an example of a hardware configuration of a computer functioning as the relay apparatus.

### Detailed Description of Embodiments

Hereinafter, the present invention will be described through embodiments, but the following embodiments do not limit the invention according to the claims. In addition, not all combinations of features described in the embodiments are essential to the solution of the invention.

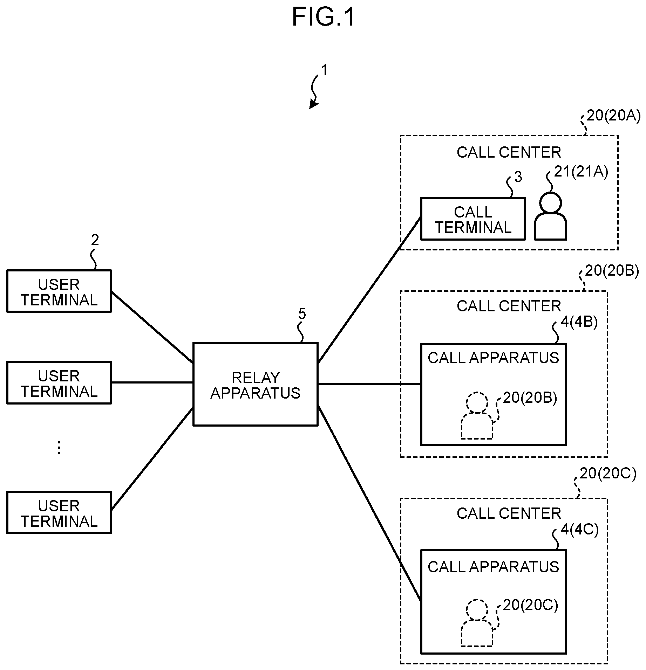

A call system 1 according to an embodiment will be described with reference to FIG. 1. FIG. 1 is a schematic diagram showing the call system 1 according to the embodiment.

The call system 1 includes a user terminal 2, a call terminal 3, a call apparatus 4, and a relay apparatus 5. The user terminal 2, the call terminal 3, and the call apparatus 4 are communicably connected by a communication network via the relay apparatus 5. The communication network includes a data communication network, and a telephone communication network.

The user terminal 2 is an apparatus capable of conversation between a user who is a customer and an operator 21 of a call center 20. The user terminal 2 enables a conversation between the user and the operator 21 via the relay apparatus 5. The user terminal 2 is, for example, a telephone, a smartphone, a tablet terminal, and a PC (Personal Computer).

The operator 21 includes a person. Also, the operator 21 includes an AI (Artificial Intelligence) agent.

The AI agent automatically generates text content to be an answer to an utterance of a user, using a text generation model. The text generation model may be interpreted as an algorithm and an operation for an automatic dialogue process by text. Since the text generation model is publicly known as disclosed in, for example, Japanese Patent Application Laid-Open No. 2018-081444 and chatGPT (Internet search <URL: https://openai.com/blog/chatgpt>), a detailed description thereof will be omitted. Such a text generation model is configured by a large language model (LLM).

The AI agent is, for example, an anthropomorphized agent. The AI agent may not be anthropomorphized. The AI agent only needs to be capable of automatically generating text content that enables a conversation with a user. That is, the AI agent may be a generative AI that automatically generates text content to be an answer to an utterance of a user.

A plurality of call terminals 3 are provided in the call center 20. The call terminal 3 is a terminal used when a person handles a user as the operator 21. The call terminal 3 is configured such that the operator 21 can converse with a user. The call terminal 3 is, for example, a smartphone, a tablet terminal, and a PC.

In the following, the operator 21 who is a person may be referred to as an "operator 21A", and the call center 20 having the operator 21A may be referred to as a "call center 20A".

For example, the call terminal 3 has a monitor, a microphone, and a speaker. When an image showing a user is transmitted from a camera of the user terminal 2, the call terminal 3 displays the transmitted image on the monitor. Also, the call terminal 3 records voice data, which is a conversation content between a user and the operator 21A, as a conversation log. The conversation log may include an image showing the user from the camera of the user terminal 2.

The call apparatus 4 is provided in the call center 20. The call apparatus 4 is provided in the call center 20 different from the call center 20A in which the call terminal 3 is provided.

Hereinafter, the call centers 20 different from the call center 20A may be referred to as a "call center 20B" and a "call center 20C". Also, the call apparatus 4 provided in the call center 20B may be referred to as a "call apparatus 4B", and the call apparatus 4 provided in the call center 20C may be referred to as a "call apparatus 4C".

The call apparatus 4 is an information processing apparatus such as a computer. The call apparatus 4 is, for example, a server apparatus. The call apparatus 4 has a plurality of AI agents as the operator 21. The call apparatus 4 causes the AI agent to function by, for example, reading a program stored in a storage unit such as a ROM (Read Only Memory) by a CPU (Central Processing Unit).

The call apparatus 4 handles a user by an AI agent. The call apparatus 4 is configured such that an AI agent can converse with a user. The call apparatus 4 has a plurality of AI agents so as to be able to individually converse with a plurality of users. A plurality of call apparatuses 4 may be provided in the call center 20.

The call apparatus 4 generates text corresponding to an utterance of a user by an AI agent, converts the generated text into voice data, and transmits it to the user terminal 2. Thereby, in the user terminal 2, an utterance based on the voice data is output. In this way, the call apparatus 4 realizes a conversation with a user by an AI agent.

The call apparatus 4B of the call center 20B and the call apparatus 4C of the call center 20C each have an operator 21 which is a different type of AI agent. Hereinafter, the operator 21 of the call apparatus 4B may be referred to as an "operator 21B", and the operator 21 of the call apparatus 4C may be referred to as an "operator 21C".

The operator 21B and the operator 21C automatically generate text content to be an answer to an utterance of the user, using respectively different text generation models.

Therefore, for example, even when a user has the same conversation, if the call center 20 to which the user terminal 2 is connected is different, a different answer (conversation) may be transmitted to the user terminal 2.

For example, the operator 21B of the call apparatus 4B of the call center 20B automatically generates text content to be an answer to an utterance of the user, using a text generation model created by "abc company". Also, the operator 21C of the call apparatus 4C of the call center 20C, using a text generation model generated by "efg company" different from "abc company", automatically generates text content to be an answer to an utterance of the user.

Although the three call centers 20 are shown in FIG. 1, the number of call centers 20 is an example, and is not limited to this. The number of call centers 20 may be two, or may be four or more. Also, there may be the plurality of call centers 20 in which the operator 21A who is a person is arranged. There may be no call center 20 in which the operator 21A who is a person is arranged.

The call apparatus 4 records voice data, which is a conversation content between a user and the operator 21 (AI agent), as a conversation log. The conversation log may include an image showing a user from a camera of the user terminal 2.

The relay apparatus 5 is an apparatus that communicably connects the user terminal 2 and the call terminal 3 of the call center 20 or the call apparatus 4 of the call center 20. The relay apparatus 5 allocates the number of lines of each call center 20 based on the number of lines to be set. The relay apparatus 5 enables connection between the user terminal 2 and the call terminal 3 or the call apparatus 4 of each call center 20 according to the allocated number of lines. The relay apparatus 5 is an information processing apparatus that sets the number of lines to be allocated to each call center 20.

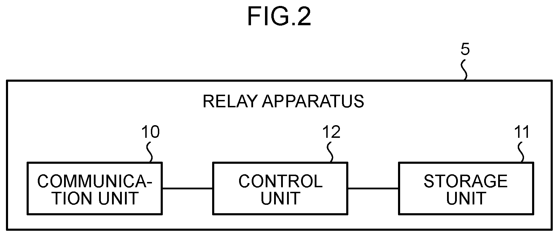

Next, the relay apparatus 5 will be described with reference to FIG. 2. FIG. 2 is a diagram schematically illustrating an example of the relay apparatus 5 according to the embodiment. Here, among functions of the relay apparatus 5, a function of setting the number of lines will be described.

The relay apparatus 5 includes a communication unit 10, a storage unit 11, and a control unit 12. The communication unit 10 transmits and receives information including a call content and the like among the user terminal 2, the call terminal 3, and the call apparatus 4 via the communication network.

The storage unit 11 is realized by, for example, a semiconductor memory element such as a RAM (Random Access Memory) and a flash memory (Flash Memory), or a storage device such as a hard disk and an optical disk. The storage unit 11 stores a score (second score) of each call center 20. The storage unit 11 stores the number of lines for each call center 20. The storage unit 11 stores various programs executed by the control unit 12.

The control unit 12 is a controller. The control unit 12 acquires a conversation log from the call terminal 3 and the call apparatus 4 of each call center 20 via the communication unit 10. The control unit 12 acquires the conversation log at a predetermined timing. The predetermined timing is, for example, a timing when a conversation between the user and the operator 21 ends. The predetermined timing may be a preset time.

The conversation log is acquired by being identified for each call center 20. For example, the conversation log is acquired with an ID determined for each call center 20 attached thereto.

The control unit 12 analyzes the acquired conversation log. Specifically, the control unit 12 analyzes a conversation content, a voice quality of the conversation, a tone of voice of the conversation, and the like from a voice of a user and a voice of the operator 21 included in a conversation log. The control unit 12 analyzes the conversation log.

For example, the control unit 12 extracts a feature amount such as a frequency component of a voice. Also, the control unit 12 analyzes a voice of a user to recognize text information representing an utterance content of the user. Then, the control unit 12 estimates an emotion of a user based on the extracted feature amount and the recognized text information.

The control unit 12 determines a degree of satisfaction of a user from an analysis result. Specifically, the control unit 12 determines a degree of satisfaction of the user based on the emotion of the user estimated from a call content of the user. Then, the control unit 12 sets a score for the degree of satisfaction of the user. That is, the control unit 12 sets a score for a response of the operator 21 (hereinafter, may be referred to as a "first score") based on a conversation log. The control unit 12 increases a first score as the degree of satisfaction of the user is higher.

The control unit 12 estimates an emotion of a user from among, for example, "joy", "anger", "sorrow", "pleasure", "pleasant", "unpleasant", "relief", "anxiety", "sadness", "excitement", "worry", "reassurance", "sense of fulfillment", "sense of emptiness", and "normal".

For example, when the user utters "It was easy to understand.", the control unit 12 estimates that the emotion of the user is a positive emotion such as "joy", "relief", or "sense of fulfillment", and estimates that the degree of satisfaction of the user is high. Then, the control unit 12 sets a first score of a large value. When the degree of satisfaction of the user is high, the control unit 12 sets the first score to a positive value.

Also, for example, when the user utters "What are you saying?", "I don't understand the meaning.", or the like, the control unit 12 estimates that an emotion of a user is a negative emotion such as "anger" or "unpleasant", and estimates that the degree of satisfaction of the user is low. Then, the control unit 12 sets a first score of a small value. When a degree of satisfaction of a user is low, the control unit 12 sets the first score to a negative value.

The control unit 12 may estimate an emotion of a user for each utterance of the user. The control unit 12 may calculate a first score by summing a score for each utterance of the user.

When a conversation log includes an image showing a user from a camera of the user terminal 2, the control unit 12 may analyze a facial expression of the user. When the facial expression of the user is, for example, a smile, the control unit 12 estimates that the degree of satisfaction of the user is high.

The control unit 12 calculates a score for each call center 20. The control unit 12 calculates an average value of the score for each call center 20 in a predetermined period as a score of each call center 20 (hereinafter, may be referred to as a "second score"). The predetermined period is a preset period. For example, the predetermined period is one week, one month, or the like.

Specifically, the control unit 12 calculates an average value of the first score of the operator 21 for each call center 20. Then, the control unit 12 sets the calculated average value of the first score as the second score of each call center 20. The control unit 12 calculates the second score for each of the call centers 20A, 20B, and 20C.

The control unit 12 sets the number of lines to be allocated to each call center 20 based on the second score of each call center 20 in the predetermined period. The control unit 12 increases the number of lines to be allocated as the second score of the call center 20 is larger.

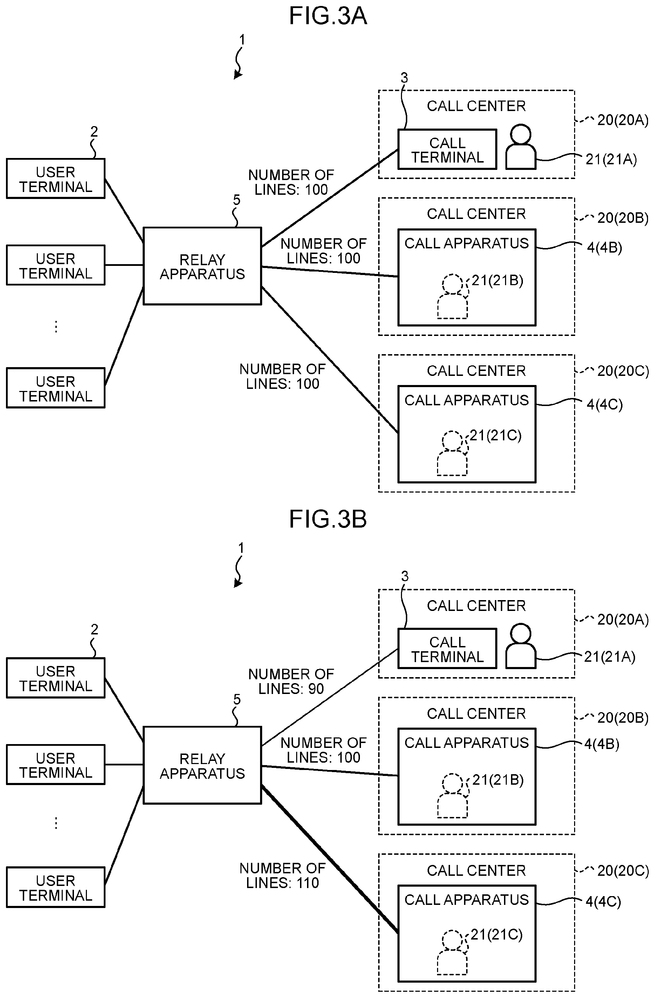

For example, when a total number of lines is "300", the second score of the call center 20A is "50", the second score of the call center 20B is "50", and the second score of the call center 20C is "50", the control unit 12 sets the number of lines of each call center 20 to "100" respectively, as shown in FIG. 3A. FIG. 3A is a diagram showing the number of lines of each call center 20. In FIG. 3A and FIG. 3B, a thicker line indicates a larger number of lines.

Thereafter, when the second score of the call center 20A becomes "40", the second score of the call center 20B becomes "50", and the second score of the call center 20C becomes "60", the control unit 12 sets the number of lines of the call center 20A to "90", the number of lines of the call center 20B to "100", and the number of lines of the call center 20C to "110", as shown in FIG. 3B. FIG. 3B is a diagram showing the number of lines of each call center 20.

Thereby, the call center 20C is allocated the large number of lines, and can handle more users. Also, a user can converse with the operator 21C having a high degree of satisfaction of the user. Therefore, for example, a user can receive an easy-to-understand explanation from the operator 21C.

When a predetermined period has elapsed and the allocation of the number of lines to each call center 20 is performed, the control unit 12 resets the second score of each call center 20. In this way, every time the predetermined period elapses, the control unit 12 updates the number of lines of each call center 20 based on the second score of each call center 20 in the predetermined period. That is, the control unit 12 executes the allocation of the number of lines of each call center 20 for each predetermined period.

That is, even in the call center 20 having the small number of lines, the number of lines can be increased, or the number of lines can be recovered.

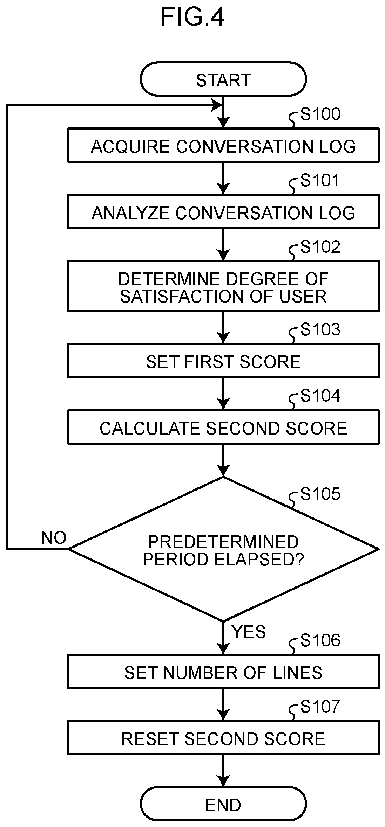

Next, a number of lines setting process according to the embodiment will be described with reference to FIG. 4. FIG. 4 is a flowchart illustrating a number of lines setting process according to the embodiment.

The control unit 12 acquires a conversation log from the call terminal 3 and the call apparatus 4 of each call center 20 (S100). The control unit 12 acquires a conversation log at a predetermined timing.

Next, the control unit 12 analyzes the acquired conversation log (S101). Next, the control unit 12 determines a degree of satisfaction of a user from an analysis result (S102), and sets a first score for a response of the operator 21 (S103).

Next, the control unit 12 calculates a second score of each call center 20 (S104). The control unit 12 calculates an average value of the first score for the response of the operator 21 for each call center 20 as the second score of each call center 20.

Next, the control unit 12 determines whether or not a predetermined period has elapsed (S105). When the predetermined period has not elapsed (S105: No), the control unit 12 returns to step S100 and repeats the above process. That is, the control unit 12 calculates a second score of each call center 20 and updates the second score of each call center 20 until the predetermined period has elapsed.

When the predetermined period has elapsed (S105: Yes), the control unit 12 sets the number of lines of each call center 20 (S106). The control unit 12 sets the number of lines of each call center 20 based on the second score of each call center 20.

Next, the control unit 12 resets the second score of each call center 20 (S107). Thereby, the second score of each call center 20 is updated for each predetermined period.

The relay apparatus 5 includes the control unit 12. The control unit 12 sets the number of lines to be allocated to each call center 20 for the plurality of call centers 20, based on a call content between the operator 21 of each call center 20 and a user.

Thereby, the relay apparatus 5 can set the number of lines of each call center 20 according to the response of the operator 21. Therefore, for example, by setting the large number of lines to the call center 20 having a high degree of satisfaction of a user, the relay apparatus 5 can realize handling of many users by the operator 21 having a high degree of satisfaction of the user. Therefore, the relay apparatus 5 can improve the degree of satisfaction of the user.

The control unit 12 estimates an emotion of a user from the call content, and sets the number of lines based on the estimated emotion.

Thereby, the relay apparatus 5 can accurately determine the degree of satisfaction of a user with respect to the response of the operator 21 based on the emotion of the user. For example, although it is possible to determine the response of the operator 21 by conducting a questionnaire to a user, since the questionnaire largely reflects a subjective impression of the user, it is difficult to accurately determine a degree of satisfaction of the user with respect to the actual response of the operator 21. On the other hand, the relay apparatus 5 can accurately determine a degree of satisfaction of a user by objectively estimating the emotion of the user from the call content. Therefore, the relay apparatus 5 can suitably set the number of lines of each call center 20 according to the degree of satisfaction of the user.

The control unit 12 sets a score for the estimated emotion of a user, and sets the number of lines based on the second score of each call center 20.

Thereby, the relay apparatus 5 can suitably set the number of lines of each call center 20 according to the response of the operator 21 of each call center 20. For example, the relay apparatus 5 can suitably set the number of lines of each call center 20 according to the response of the operator 21 of each call center 20 by making the number of lines of the call center 20 having a large second score smaller than the number of lines of the call center 20 having a small second score.

The control unit 12 sets the number of lines based on the second score of each call center 20 in a predetermined period.

Thereby, the relay apparatus 5 can set the number of lines reflecting the response of the operator 21 of each call center 20. Therefore, even for the call center 20 having a low second score and a small number of lines, for example, when the second score becomes large by updating the AI agent, a large number of lines can be acquired.

The operator 21 includes a person. Thereby, the call center 20 can take a response according to various users.

The operator 21 includes an AI agent. Thereby, the call center 20 can suppress costs.

The AI agent is different for each call center 20. Thereby, the call center 20 in which an excellent AI agent is arranged can obtain a large number of lines.

The functions of the relay apparatus 5 may be implemented by one or more computers. At least a part of the functions of the relay apparatus 5 may be implemented by a virtual machine. Also, at least a part of the functions of the relay apparatus 5 may be implemented in a cloud.

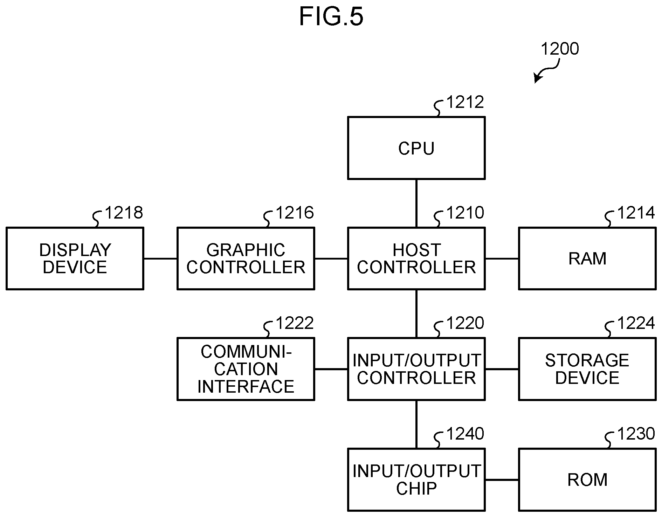

FIG. 5 is a diagram schematically showing an example of a hardware configuration of a computer 1200 functioning as the relay apparatus 5. A program installed in the computer 1200 can cause the computer 1200 to function as one or a plurality of "units" of the apparatus according to the present embodiment, or can cause the computer 1200 to execute an operation associated with the apparatus according to the present embodiment or the one or plurality of "units", and/or can cause the computer 1200 to execute a process according to the present embodiment or a stage of the process. Such a program may be executed by a CPU 1212 to cause the computer 1200 to execute a specific operation associated with some or all of the blocks of the flowcharts and block diagrams described in the present specification.

The computer 1200 according to the present embodiment includes a CPU 1212, a RAM 1214, and a graphic controller 1216, which are mutually connected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes input/output units such as a ROM 1230 and a keyboard, which are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer or the like provided in the RAM 1214 or in itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like, and provides it to the storage device 1224. The IC card drive reads a program and data from an IC card, and/or writes a program and data to an IC card.

The ROM 1230 stores therein a boot program or the like executed by the computer 1200 at the time of activation, and/or a program depending on the hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from the computer-readable storage medium, installed in the storage device 1224, the RAM 1214, or the ROM 1230, which are also examples of the computer-readable storage medium, and executed by the CPU 1212. Information processing described in these programs is read by the computer 1200, and brings about cooperation between the programs and the various types of hardware resources described above. An apparatus or a method may be configured by realizing an operation or processing of information according to the use of the computer 1200.

For example, when communication is executed between the computer 1200 and an external device, the CPU 1212 may execute a communication program loaded in the RAM 1214, and instruct the communication interface 1222 to perform communication processing based on the processing described in the communication program. Under the control of the CPU 1212, the communication interface 1222 reads transmission data stored in a transmission buffer area provided in a recording medium such as the RAM 1214, the storage device 1224, a DVD-ROM, or an IC card, transmits the read transmission data to a network, or writes reception data received from a network to a reception buffer area or the like provided on a recording medium.

Also, the CPU 1212 may cause all or a necessary part of a file or a database stored in an external recording medium such as the storage device 1224, a DVD drive (DVD-ROM), an IC card, or the like to be read into the RAM 1214, and may execute various types of processing on the data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing including various types of operations, information processing, condition judgment, conditional branching, unconditional branching, information search/replacement, and the like described throughout the present disclosure and specified by an instruction sequence of a program, on the data read from the RAM 1214, and writes back a result to the RAM 1214. Also, the CPU 1212 may search for information in a file, a database, or the like in a recording medium. For example, when a plurality of entries each having an attribute value of a first attribute associated with an attribute value of a second attribute are stored in a recording medium, the CPU 1212 may search for an entry in which the attribute value of the first attribute matches a specified condition from among the plurality of entries, read the attribute value of the second attribute stored in the entry, and thereby acquire the attribute value of the second attribute associated with the first attribute satisfying a predetermined condition.

The above-described program or software module may be stored in a computer-readable storage medium on the computer 1200 or in the vicinity of the computer 1200. Also, a recording medium such as a hard disk or a RAM provided in a server system connected to a dedicated communication network or the Internet can be used as a computer-readable storage medium, thereby providing a program to the computer 1200 via a network.

Blocks in the flowcharts and block diagrams in the present embodiment may represent stages of a process in which an operation is executed or "units" of an apparatus responsible for executing an operation. Specific stages and "units" may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include digital and/or analog hardware circuits, and may include integrated circuits (ICs) and/or discrete circuits. The programmable circuit may include reconfigurable hardware circuits including logical AND, logical OR, exclusive OR, logical NAND, logical NOR, and other logical operations, flip-flops, registers, and memory elements, such as, for example, field programmable gate arrays (FPGAs), programmable logic arrays (PLAs), and the like.

The computer-readable storage medium may include any tangible device capable of storing instructions executed by a suitable device, and as a result, the computer-readable storage medium having instructions stored therein will comprise an article of manufacture including instructions that can be executed to create means for executing operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disc read only memory (CD-ROM), a digital versatile disc (DVD), a Blu-ray (registered trademark) disc, a memory stick, an integrated circuit card, and the like.

The computer-readable instructions may include either source code or object code written in any combination of one or more programming languages, including assembler instructions, instruction set architecture (ISA) instructions, machine instructions, machine-dependent instructions, microcode, firmware instructions, state-setting data, or object-oriented programming languages such as Smalltalk (registered trademark), JAVA (registered trademark), C++, and the like, and conventional procedural programming languages such as the "C" programming language or similar programming languages.

The computer-readable instructions may be provided to a processor of a general purpose computer, a special purpose computer, or other programmable data processing apparatus, or a programmable circuit, locally or via a wide area network (WAN) such as a local area network (LAN), the Internet, or the like, so that the processor of the general purpose computer, the special purpose computer, or other programmable data processing apparatus, or the programmable circuit executes the computer-readable instructions to generate means for executing operations specified in the flowcharts or block diagrams. Examples of the processor include a computer processor, a processing unit, a microprocessor, a digital signal processor, a controller, a microcontroller, and the like.

As described above, the present invention has been described using the embodiments, but the technical scope of the present invention is not limited to the scope described in the above embodiments. It is apparent to those skilled in the art that various modifications or improvements can be added to the above embodiments. It is apparent from the description of the claims that forms added with such modifications or improvements can also be included in the technical scope of the present invention.

It should be noted that the execution order of each processing such as operations, procedures, steps, and stages in the apparatus, system, program, and method shown in the claims, the specification, and the drawings can be realized in any order unless specifically stated as "before", "prior to", or the like, and unless an output of a previous processing is used in a subsequent processing. Regarding the operation flow in the claims, the specification, and the drawings, even if described using "first", "next", or the like for convenience, it does not mean that it is essential to implement in this order.

### List of Reference Signs

1 Call system
2 User terminal
3 Call terminal
4 Call apparatus
5 Relay apparatus
12 Control unit
20 Call center
21 Operator

## Claims

1. An information processing apparatus comprising:
a control unit that sets a number of lines to be allocated to each call center for a plurality of call centers, based on a call content between an operator of each call center and a customer.

2. The information processing apparatus according to claim 1, wherein
the control unit estimates an emotion of the customer from the call content, and sets the number of lines based on the estimated emotion.

3. The information processing apparatus according to claim 2, wherein
the control unit sets a score for the estimated emotion, and sets the number of lines based on a score of each call center.

4. The information processing apparatus according to claim 3, wherein
the control unit sets the number of lines based on a score of each call center in a predetermined period.

5. The information processing apparatus according to claim 1, wherein
the operator includes a person.

6. The information processing apparatus according to claim 1, wherein
the operator includes an Artificial Intelligence (AI) agent.

7. The information processing apparatus according to claim 6, wherein
the AI agent is different for each call center.

8. An information processing method comprising:
setting a number of lines to be allocated to each call center for a plurality of call centers, based on a call content between an operator of each call center and a customer.
